Europäisches Patentamt

European Patent Office

Office européen des brevets

(19)

(11) Veröffentlichungsnummer: **0 271 746 B1**

# EUROPÄISCHE PATENTSCHRIFT

(45) Veröffentlichungstag der Patentschrift: **18.09.91**

(51) Int. Cl.⁵: **A23B 4/044**

(21) Anmeldenummer: **87117343.1**

(22) Anmeldetag: **25.11.87**

(54) **Verfahren zum Behandeln von Lebensmittelware mit Rauch.**

(30) Priorität: **10.12.86 DE 3642175**

(43) Veröffentlichungstag der Anmeldung:
**22.06.88 Patentblatt 88/25**

(45) Bekanntmachung des Hinweises auf die
Patenterteilung:
**18.09.91 Patentblatt 91/38**

(84) Benannte Vertragsstaaten:
**DE FR IT SE**

(56) Entgegenhaltungen:
CH-A- 313 546       FR-A- 967 457
GB-A- 143 178       US-A- 2 266 131
US-A- 2 310 222     US-A- 2 352 590
US-A- 3 069 998     US-A- 4 469 020

(73) Patentinhaber: **Erich Schröter Gmbh
Berghausen 24
W-4807 Borgholzhausen(DE)**

(72) Erfinder: **Schröter, Max
Hermann Strasse 2
W-4802 Halle(DE)**

(74) Vertreter: **Dipl.-Ing. T. Hoefer
Patentanwälte Dipl.-Ing. T. Hoefer Dipl.-Ing.
Dipl.-Wirtsch.Ing. H.W. Schmitz
Dr.-Ing.Dipl.-Ing. Dr. J. Weber Ludwig-
Ganghofer-Str. 20
W-8022 Grünwald bei München(DE)**

## Beschreibung

Die Erfindung betrifft ein Verfahren zum Behandeln von Lebensmittelware, wie Fleisch, Fisch, o.dgl. mit Rauch in einer Behandlungskammer.

Lebensmittel, wie Wurst, Fleisch oder Fisch, werden bekanntlich in klimatisierten Räumen gereift, getrocknet und mit oder ohne Beimischung von Rauch konserviert oder auch gelagert. Beim Räuchern entsteht eine Umweltbelastung, da der erzeugte und in der Behandlungskammer eine Zeitlang verweilende Rauch schließlich in die Atmosphäre abgeleitet werden muß. Dieses erfordert in der Zukunft aufwendige Rauchreinigungsvorrichtungen.

Der Erfindung liegt die Aufgabe zugrunde, den Räuchervorgang bei geringerem Energiebedarf wirkungsvoller zu gestalten und die Umweltbelastung zu verringern und bei verringerter Behandlungszeit die Qualität der Räucherware nicht nur beizubehalten, sondern noch zu verbessern.

Diese Aufgabe wird erfindungsgemäß beim Behandeln von Lebensmittelware mit Rauch durch folgende Verfahrensschritte gelöst:

a) Die feuchte Ware wird in der geschlossenen Kammer bei Atmosphärendruck erwärmt,

b) in der Kammer wird ein Vakuum erzeugt,

c) in die evakuierte Kammer wird Rauch eingeleitet.

Beispielsweise durch Einleiten von erwärmter Luft oder von Dampf bis zu Sattdampf kann die Ware in der Behandlungskammer erwärmt werden. Dabei ist die Behandlungskammer geschlossen. Die aus der Ware austretende Feuchtigkeit wird nicht abgeführt. Infolge der hohen Feuchtigkeit der Ware tritt eine gleichmäßige Durchwärme auf, bis die Ware eine bestimmte gleichmäßige Temperatur (Kerntemperatur) angenommen hat. Bei Verwendung von Sattdampf kann schneller erwärmt werden.

Nach der Erwärmung auf die Kerntemperatur wird der noch in der Anlage vorhandene Druck mit Hilfe einer Vakuumpumpe langsam abgebaut. Mit abnehmendem Druck in der Kammer sinkt die Siedetemperatur des in der Ware befindlichen Wassers. Ein Teil des Wassers verdampft dabei. Erzeugt man beispielsweise ein extrem niedriges Vakuum von 97 %, so daß der Druck auf 0,03 bar absinkt, so liegt die Verdampfungstemperatur bei ca. 25°C. Zum Verdampfen, also Trocknen der Ware ist daher die Zuführung von zusätzlicher Energie entbehrlich. Während die Ware abkühlt, verdampft Wasser aus der Ware.

Nachdem im Vakuum die Feuchtigkeit aus der Ware bis zu einem gewünschten Maß entfernt worden ist, wird der Rauch, wie Holzgas, in die Kammer eingeleitet. Dieser ist unverdünnt und wirkt im Vakuum intensiv auf die Ware ein. Der Rauch kann daher in die Oberfläche der Ware eindiffundieren. Daher kann Rauch solange in der Kammer verweilen, bis er nicht mehr sichtbar ist. Es erfolgt also nicht nur eine bessere Verteilung des Rauches in der Kammer, sondern es sind bei Verwendung des Vakuums auch geringere Rauchmengen erforderlich als bei Atmosphärendruck. Damit werden auch die nachteiligen Abgasmengen geringer.

Bevorzugt werden die Erwärmung und die Evakuierung mehrmals nacheinander durchgeführt. Dabei kann jeweils beispielsweise Außenluft in die Kammer eingelassen und auf Kerntemperatur erwärmt werden. Dieser Vorgang läßt sich beliebig oft wiederholen, bis der gewünschte Wasserentzug erreicht ist.

Auch die Einleitung von Rauch kann bevorzugt mehrmals nacheinander durchgeführt werdne, bis die gewünschte Qualität wie Farbtönung der Ware erreicht ist.

Das erfindungsgemäße Verfahren weist folgende Vorteile auf:

Die Erwärmung der Ware bei ansteigender Feuchtigkeit (mit der Eigenfeuchte im geschlossenen Raum) verläuft sehr gleichmäßig; durch das Absenken des Atmosphärendrucks in der Behandlungskammer verdampft das Wasser gleichmäßig an der Oberfläche der Ware, und schließlich wird praktisch die Umwelt nicht verschmutzt, da der injizierte Rauch optimal ausgenutzt wird und nicht abgeführt werden muß.

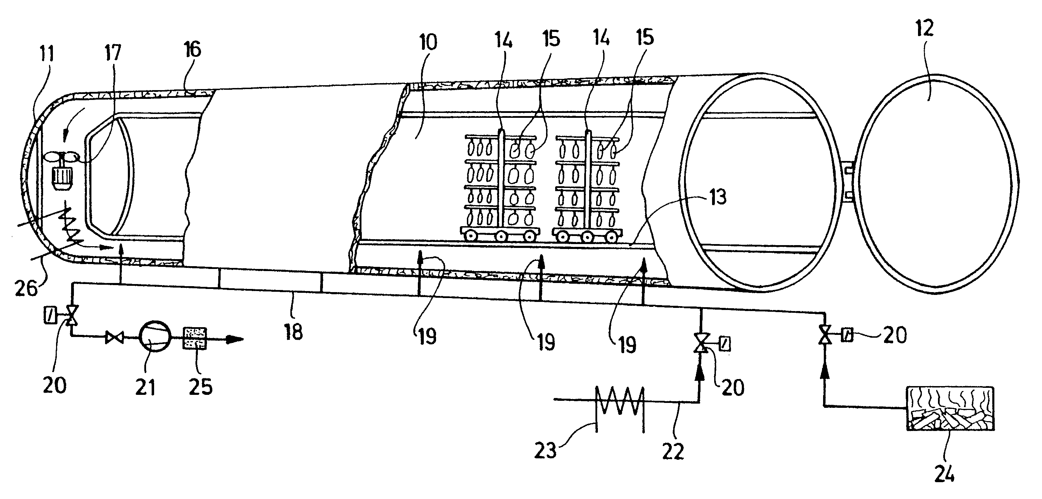

Ein Ausführungsbeispiel einer Vorrichtung ist in der Zeichnung dargestellt und wird im folgenden näher beschrieben.

Die Zeichnung zeigt eine liegende, teilweise aufgebrochene Behandlungskammer für Lebensmittelware, wie Wurst oder Schinken, in perspektivischer Darstellung mit schematisch angedeuteten Rohrleitungen und Armaturen.

Eine Behandlungskammer (10) weist einen liegenden kreiszylindrischen Behälter auf, der an einer Stirnseite mit einem befestigten gewölbten Boden (11) und an der anderen Stirnseite mit einer abklappbaren Verschlußklappe (12) ausgestattet sein kann. In der Kammer (10) sind feste Schienen (13) angeordnet, auf denen Ständer (14) für die von Wurst o.dgl. gebildete Ware (15) in Längsrichtung der Kammer (10) verfahrbar sind. Die Ständer (14) mit der Ware (15) können daher durch die stirnseitige Öffnung in die Kammer (10) eingefahren und auf den Schienen (13) in Längsrichtung der Kammer (10) verschoben werden. Danach läßt sich die Kammer (10) mit der Verschlußklappe (12) an der Öffnungsstirnseite schließen.

Innerhalb der Behandlungskammer (10) ist an der inneren Oberfläche eine Isolierschicht (16) angebracht, damit die Innentemperatur während der Verfahrensschritte möglichst wenig durch die Außentemperatur beeinflußt wird. Im Bereich des gewölbten Bodens (11) ist in der Behandlungskammer (10) ein Umluftventilator (17) vorgesehen, dem zusätzlich wahlweise ein Wärmetauscher (25) nachgeschaltet sein kann.

Außerhalb der Behandlungskammer (10) verläuft eine achsparallele Ver- und Entsorgungsleitung (18), von der aus radiale Leitungen in Abständen voneinander zur Behandlungskammer (10) führen und in dieser an Einströmdüsen (19) enden. Die Ver- und Entsorgungsleitung (18) ist an einem Ende über ein Absperrventil (20) und eine Rohrleitung an eine Vakuumpumpe (21) angeschlossen, deren Druckseite über ein Filter (25) zur Umgebung geöffnet ist. Am anderen Ende der Ver- und Entsorgungsleitung (18) sind zwei achsparallele Absperrventile (20) über Rohrleitungen angeschlossen, wobei das eine Absperrventil (20) einen Außenluftanschluß (22) absperrt, der die Außenluft über eine Heizung (23) in die Leitung (18) einleiten kann. Das andere Absperrventil (20) ist mit der von einem Raucherzeuger (24) kommenden Leitung verbunden.

Es ist also möglich, über die Ver- und Entsorgungsleitung (18) entweder an der Heizung (23) erwärmte Außenluft in die Behandlungskammer (20) einzuleiten oder den im Raucherzeuger (24) entstandenen Rauch in die Kammer zu leiten oder über die Ver- und Entsorgungsleitung (18) kann mit Hilfe der Vakuumpumpe (21) die Behandlungskammer (10) luftevakuiert werden. Dabei werden noch restliche Rauchrückstände aus der ins Freie strömenden Luft im Filter (25) zurückgehalten. Diese unterschiedlichen Arbeitsweisen bedingen nur die Öffnung bzw. Schließung der jeweiligen Absperrventile (20).

Im Bereich des Umluftventilators (17) kann in bevorzugter Weise noch ein Wärmetauscher (26) eingesetzt sein, der die Aufgabe hat, bei Bedarf die Umluft zu erwärmen oder zu kühlen, um z.B. eine gleichbleibende Umlufttemperatur aufrechtzuerhalten.

Es ist auch vorzugsweise möglich, über das Absperrventil (20) und die Leitung (18) nicht nur Außenluft in die Kammer (10) einzuführen, sondern auch Innenluft aus der Kammer (10) abzuführen.

Das Verfahren ist insbesondere zum Kalträuchern bei etwa 30° bis 40°C geeignet, um ein Reifen von Rohwurst, Schinken, Dauerwurst o.dgl. zu erzielen. Dazu wird die Ware langsam auf die vorgenannte Temperatur als Kerntemperatur erwärmt (u.a. zur vorteilhaften Gelbildung). Dabei kann der zunächst höher liegende pH-Wert von 5,6 - 5,9 auf 5,0 - 5,4 absinken.

Anschließend wird ein leichtes Vakuum von 25-50 % mittels der Vakuumpumpe gezogen, das etwa 12 - 36 Std., je nach gegebenem Wurstkaliber aufrechterhalten wird.

Anschließend wird konzentriertes Holzgas als Räuchermittel eingepumpt, wobei dieses Räuchern ebenfalls 12 36 Std. bei etwa gleichbleibender Temperatur in Anspruch nimmt.

Im Vakuum besteht der Vorteil, daß ein gleichmäßiger Feuchtigkeitsentzug eintritt, durch welcher die Qualität der Ware verbessert wird.

In Sonderfällen kann auch mit dem vorliegenden Verfahren und der Vorrichtung ein Heißräuchern bei 40 - 80°C vorgenommen werden, insbesondere für Brühwurst oder Kochschinken o.dgl.

Nach dem Aufheizen auf gleichmäßige Kerntemperatur wird das Vakuum etwa 10 bis 30 Min. zum Feuchtigkeitsentzug aufrechterhalten, dann wird unter Vakuum das Räuchergas eingelassen und während 60 - 120 Min. die Ware geräuchert.

Das erfindungsgemäße Vakuum hat u.a. den Vorteil, daß Hertstellungsfehler in der Rohwarenzusammensetzung sich nicht nachteilig auswirken. Außerdem werden gegenüber bekannten Räucherverfahren ohne Vakuum Trockenränder vermieden (Ware ist nachteilig außen hart und innen weich). Auch lassen sich dabei Trocknungsfehler vermeiden.

Das erfindungsgemäße Verfahren und die Vorrichung zeigen auch den Vorteil, daß eine wesentlich geringere Behandlungsdauer, z.B. nur 3-5 Tage bis zur fertigen Räucherware erreicht werden können.

**Patentansprüche**

1. Verfahren zum Behandeln von Lebensmittelware, wie Fleisch oder Fisch, mit Rauch in einer Behandlungskammer (10), gekennzeichnet durch folgende Verfahrensschritte:
   a) Die feuchte Ware wird in der geschlossenen druckdichten Kammer (10) bei Atmosphärendruck erwärmt,
   b) in dieser Kammer (10) wird ein Vakuum erzeugt,
   c) in dieser evakuierten Kammer (10) wird Rauch eingeleitet.

2. Verfahren nach Anspruch 1, dadurch gekennzeichnet, daß
   a) die feuchte Ware in der geschlossenen Kammer (10) bei Atmosphärendruck auf 30 - 40°C erwärmt wird,
   b) dann in dieser Kammer (10) ein Vakuum von 25 - 50 % gezogen wird,
   c) anschließend in diese evakuierte Kammer (10) Rauch eingeleitet wird.

3. Verfahren nach Anspruch 1, dadurch gekennzeichnet, daß
   a) die feuchte Ware in dieser geschlossenen Kammer (10) bei Atmosphärendruck auf 40 - 80° C erwärmt wird,

b) das Vakuum in der Kammer (10) auf ca. 10 - 30% gezogen wird,

c) dann in diese evakuierte Kammer (10) Rauch eingeleitet wird.

4. Verfahren nach Anspruch 1 bis 3, dadurch gekennzeichnet, daß die Ware durch Einleiten von erwärmter Luft in die Kammer (10) erwärmt wird.

5. Verfahren nach Anspruch 1 bis 4, dadurch gekennzeichnet, daß die Ware durch Einleiten von Dampf bis zu Sattdampf in die Kammer (10) erwärmt wird.

6. Verfahren nach den Ansprüchen 1 bis 5, dadurch gekennzeichnet, daß die Ware mehrmals nacheinander erwärmt und die Luft evakuiert wird.

7. Verfahren nach den Ansprüchen 1 bis 6, dadurch gekennzeichnet, daß Rauch mehrmals nacheinander jeweils nach einer Vakuumphase eingeleitet wird.

8. Verfahren nach einem der Ansprüche 1 bis 7, dadurch gekennzeichnet, daß eine als zylindrischer Behälter ausgebildete Behandlungskammer (10) verwendet wird, die an einer Stirnseite eine Verschlußklappe (12) aufweist und deren Wände mit einer Isolierschicht (16) belegt sind.

9. Verfahren nach einem der Ansprüche 1 bis 8, dadurch gekennzeichnet, daß eine Kammer (10) mit mehreren darin mündenden Einströmdüsen einer Ver- und Entsorgungsleitung verwendet wird, die mit einem Außenluftanschluß (22) einem Raucherzeuger (24) und einer Vakuumpumpe (21) jeweils über ein Absperrventil (20) verbunden ist.

10. Verfahren nach einem der Ansprüche 1 bis 9, dadurch gekennzeichnet, daß eine Kammer (10) mit in Längsrichtung in Abständen voneinander angeordneten Einströmdüsen (19) verwendet wird.

11. Verfahren nach einem der Ansprüche 1 bis 10, dadurch gekennzeichnet, daß eine Kammer (10) mit Versorgungs-und Entsorgungsleitungen (18) in deren Längsrichtung an der Außenseite verwendet wird.

12. Verfahren nach einem der Ansprüche 1 bis 11, dadurch gekennzeichnet, daß eine Kammer (10) mit einem Umluftventilator (17) verwendet wird, dem wahlweise ein Wärmetauscher vor- oder nachgeschaltet ist.

## Claims

1. Process for smoking food stuffs, such as meat or fish in a treatment chamber (10), characterized by the following process steps:

   a) the moist product is heated at atmospheric pressure in the closed pressure-tight chamber (10),

   b) a vacuum is produced in the said chamber (10) and

   c) smoke is introduced into said evacuated chamber (10).

2. Process according to claim 1, characterized in that

   a) the moist product is heated at atmospheric pressure to 30 to 40° C in the closed chamber (10),

   b) then a 25 to 50% vacuum is formed in said chamber (10) and

   c) subsequently smoke is introduced into said evacuated chamber (10).

3. Process according to claim 1, characterized in that

   a) the moist product is heated at atmospheric pressure to 40 to 80° C in the closed chamber (10),

   b) the vacuum in the chamber (10) is brought to approximately 10 to 30% and

   c) smoke is introduced into this evacuated chamber (10).

4. Process according to claims 1 to 3, characterized in that the product is heated by introducing heated air into the chamber (10).

5. Process according to claims 1 to 4, characterized in that the product is heated by introducing steam up to saturated steam in the chamber (10).

6. Process according to claims 1 to 5, characterized in that the product is heated several times in succession and the air is evacuated.

7. Process according to claims 1 to 6, characterized in that smoke is successively introduced several times in each case following a vacuum phase.

8. Process according to one of the claims 1 to 7, characterized in that a treatment chamber (10) constructed as a cylindrical container is used, which is provided on one face with a lid (12) and whose walls are covered with an insulating layer (16).

9. Process according to one of the claims 1 to 8, characterized in that use is made of a chamber (10) with several inflow nozzles of a supply and discharge line issuing into the same and which is connected to an external air connection (22), a smoke generator (24) and a vacuum pump (21) in each case by means of a shutoff valve (20).

10. Process according to one of the claims 1 to 9, characterized in that use is made of a chamber (10) with longitudinally spaced inflow nozzles (19).

11. Process according to one of the claims 1 to 10, characterized in that use is made of a chamber (10) with supply and discharge lines (18) in its longitudinal direction and on the outside thereof.

12. Process according to one of the claims 1 to 11, characterized in that use is made of a chamber (10) with a circulating air fan (17), upstream or downstream of which can be connected a heat exchanger.

**Revendications**

1. Procédé de conditionnement de denrées alimentaires, telles que de la viande ou du poisson, à la fumée et dans une chambre de conditionnement (10), caractérisé par les opérations suivantes de procédé :
   a) on élève la température de la denrée humide, à la pression atmosphérique, dans la chambre (10) étanche à la pression et fermée,
   b) on produit un vide dans cette chambre (10) et
   c) on introduit de la fumée dans cette chambre (10) mise sous vide.

2. Procédé suivant la revendication 1, caractérisé en ce que :
   a) on élève la température de la denrée humide jusqu'à 30 à 40° C, à la pression atmosphérique, dans la chambre (10) fermée,
   b) on crée alors un vide de 25 à 50% dans cette chambre (10) et
   c) on introduit ensuite de la fumée dans cette chambre (10) mise sous vide.

3. Procédé suivant la revendication 1, caractérisé en ce que :
   a) on élève la température de la denrée humide jusqu'à 40 à 80° C, à la pression atmosphérique, dans la chambre (10) fermée,
   b) on crée dans la chambre (10) un vide d'environ 10 à 30% et
   c) on introduit alors de la fumée dans la chambre (10) mise sous vide.

4. Procédé suivant l'une des revendications 1 à 3, caractérisé en ce qu'on élève la température de la denrée par introduction d'air réchauffé dans la chambre (10).

5. Procédé suivant l'une des revendications 1 à 4, caractérisé en ce qu'on élève la température de la denrée par introduction de vapeur, même de vapeur saturée, dans la chambre (10).

6. Procédé suivant l'une des revendications 1 à 5, caractérisé en ce qu'on élève la température de la denrée plusieurs fois successives et on évacue l'air.

7. Procédé suivant l'une des revendications 1 à 6, caractérisé en ce qu'on introduit de la fumée plusieurs fois successives, chaque fois après une phase de vide.

8. Procédé suivant l'une des revendications 1 à 7, caractérisé en ce qu'on utilise une chambre de conditionnement (10), réalisée sous la forme d'un réservoir cylindrique, qui comporte un couvercle d'obturation (12) sur l'une de ses faces frontales et dont les parois sont revêtues d'une couche isolante (16).

9. Procédé suivant l'une des revendications 1 à 8, caractérisé en ce qu'on utilise une chambre (10) qui comporte, y débouchant, plusieurs buses d'introduction d'une tuyauterie d'alimentation et d'évacuation qui est reliée à une prise d'air extérieur (22), à un générateur de fumée (24) et à une pompe à vide (21), chaque fois par l'intermédiaire d'une vanne d'arrêt (20).

10. Procédé suivant l'une des revendications 1 à 9, caractérisé en ce qu'on utilise une chambre (10) comportant des buses d'introduction (19) disposées à distance les unes des autres suivant sa longueur.

11. Procédé suivant l'une des revendications 1 à 10, caractérisé en ce qu'on utilise une chambre (10) comportant des tuyauteries d'alimentation et d'évacuation suivant sa longueur et du côté extérieur.

12. Procédé suivant l'une des revendications 1 à 11, caractérisé en ce qu'on utilise une chambre (10) comportant un ventilateur de circulation (17) qui est monté au choix en amont ou en aval d'un échangeur de chaleur.